# EUROPEAN PATENT APPLICATION

(11) **EP 4 636 280 A1**
(43) Date of publication of application: **22.10.2025**
(21) Application number: 23903355.8
(22) Date of filing: 05.12.2023
(51) Int. Cl.: F16H 15/38

(54) **TOROIDAL CONTINUOUSLY VARIABLE TRANSMISSION**

(30) Priority: 15.12.2022 JP 2022200234
(71) Applicant: KAWASAKI JUKOGYO KABUSHIKI KAISHA, Kobe-shi, Hyogo 650-8670 (JP)
(72) Inventor: SEKOGUCHI, Naoya, Kobe-shi, Hyogo 650-8670 (JP); IMAI, Hideyuki, Kobe-shi, Hyogo 650-8670 (JP); KOMATSU, Kenji, Kobe-shi, Hyogo 650-8670 (JP)
(74) Representative: Dantz, Jan Henning
(86) International application number: PCT/JP2023/043444
(87) International publication number: WO 2024/128066

(57) **Abstract**

A loading cam of a toroidal continuously variable transmission includes: a cam plate that is rotatable about a rotation axis and includes a cam surface opposed to a disc in an axial direction; and a roller sandwiched between a cam surface of the disc and the cam surface of the cam plate. In a cross section that extends in a circumferential direction of the cam plate and is viewed in a radial direction of the cam plate, the cam surface of the cam plate includes a concave surface that curves such that a cam lead of the concave surface increases.

## Description

### Technical Field

The present disclosure relates to a toroidal continuously variable transmission.

### Background Art

According to a toroidal continuously variable transmission, a power roller is sandwiched between an input disc and an output disc, and a change gear ratio is continuously changed by tilting the power roller. The toroidal continuously variable transmission includes a loading cam that generates axial force acting such that the input disc and the output disc approach each other. The loading cam includes: a cam plate opposed to a back surface (cam surface) of the disc; and a roller sandwiched between the cam surface of the disc and a cam surface of the cam plate. As transmitting torque at the loading cam increases, the disc is biased by a cam action so as to be separated from the cam plate, and the power roller is sandwiched by the input disc and the output disc with adequate contact pressure.

In the loading cam disclosed in PTL 1, the cam plate includes: a first cam surface having a constant inclination angle; and a second cam surface located adjacent to the first cam surface and having a constant inclination angle larger than the inclination angle of the first cam surface.

### Citation List

### Patent Literature

PTL 1: Japanese Laid-Open Patent Application Publication No. 10-141461

### Summary of Invention

### Technical Problem

In the loading cam of PTL 1, the inclination angles of the first and second cam surfaces are constant. To be specific, in this loading cam, a cam lead which denotes an axial advance amount per unit disc rotation is constant regarding each of the first cam surface and the second cam surface.

When the inclination angle of the cam surface is large, a load applied from the roller to the cam surface tends to be directed in a circumferential direction, and therefore, an axial component force of the load decreases. Thus, the axial force of the loading cam decreases even not in a high torque range and may become inadequate depending on the situation. On the other hand, when the inclination angle of the cam surface is small, the load applied from the roller to the cam surface tends to be directed in the axial direction, and therefore, the axial component force of the load increases. Thus, the axial force of the loading cam becomes excessive in the high torque range, and an overload may be caused at the disc and the power roller.

An object of one aspect of the present disclosure is to, while appropriately increasing axial force of a loading cam in a toroidal continuously variable transmission in accordance with an increase in torque, prevent the axial force from becoming excessive in a high torque range.

### Solution to Problem

A toroidal continuously variable transmission according to one aspect of the present disclosure includes: a first disc and a second disc that are located so as to be opposed to each other and share a rotation axis; a power roller sandwiched between the first disc and the second disc so as to be tiltable; and a loading cam that presses the second disc toward the first disc in an axial direction in which the rotation axis extends. The loading cam includes: a cam plate that is rotatable about the rotation axis and includes a cam surface opposed to the second disc in the axial direction; and a roller sandwiched between a cam surface of the second disc and the cam surface of the cam plate. In a cross section that extends in a circumferential direction of the cam plate and is viewed in a radial direction of the cam plate, the cam surface of the cam plate includes a concave surface that curves such that a cam lead of the concave surface increases.

A toroidal continuously variable transmission according to another aspect of the present disclosure includes: a first disc and a second disc that are located so as to be opposed to each other and share a rotation axis; a power roller sandwiched between the first disc and the second disc so as to be tiltable; and a loading cam that presses the second disc toward the first disc in an axial direction in which the rotation axis extends. The loading cam includes: a cam plate that is rotatable about the rotation axis and includes an opposing surface including a cam surface opposed to the second disc in the axial direction; and a roller sandwiched between a cam surface of the second disc and the cam surface of the cam plate. In a circumferential direction of the cam surface, a side located in a direction in which the roller moves on the cam surface of the cam plate in accordance with an increase in transmitting torque of the loading cam is defined as a terminal end side. In a cross section that extends in the circumferential direction and is viewed in a radial direction of the cam plate, the opposing surface of the cam plate includes a stopper surface that is continuous with an end, located at the terminal end side in the circumferential direction, of the cam surface and is directed in the circumferential direction.

### Advantageous Effects of Invention

According to the aspect of the present disclosure, while appropriately increasing the axial force of the loading cam in the toroidal continuously variable transmission in accordance with the increase in the torque, the axial force can be prevented from becoming excessive in the high torque range.

### Brief Description of Drawings

FIG. 1 is a cross-sectional view of an integrated drive generator including a toroidal continuously variable transmission according to Embodiment 1.
FIG. 2 is a side view of a loading cam of FIG. 1 when viewed in an axial direction.
FIG. 3 is a cross-sectional view taken along line III-III of FIG. 2 and is a cross-sectional view of the loading cam.
FIG. 4 is a cross-sectional view of the loading cam of FIG. 3 at the time of high torque.
FIG. 5 is a graph showing a relation between transmitting torque and axial force of the loading cam of FIG. 3.
FIG. 6 is a cross-sectional view of the loading cam according to Embodiment 2.
FIG. 7 is a graph showing a relation between the transmitting torque and axial force of the loading cam of FIG. 6.
FIG. 8 is a cross-sectional view of the loading cam according to Embodiment 3.
FIG. 9 is a cross-sectional view of the loading cam of FIG. 8 at the time of high torque.
FIG. 10 is a graph showing a relation between the transmitting torque and axial force of the loading cam of FIG. 8.
FIG. 11 is a cross-sectional view of a cam plate of the loading cam according to Embodiment 4.
FIG. 12 is a cross-sectional view of the cam plate of the loading cam according to Embodiment 5.

### Description of Embodiments

Hereinafter, embodiments will be described with reference to the drawings.

### Embodiment 1

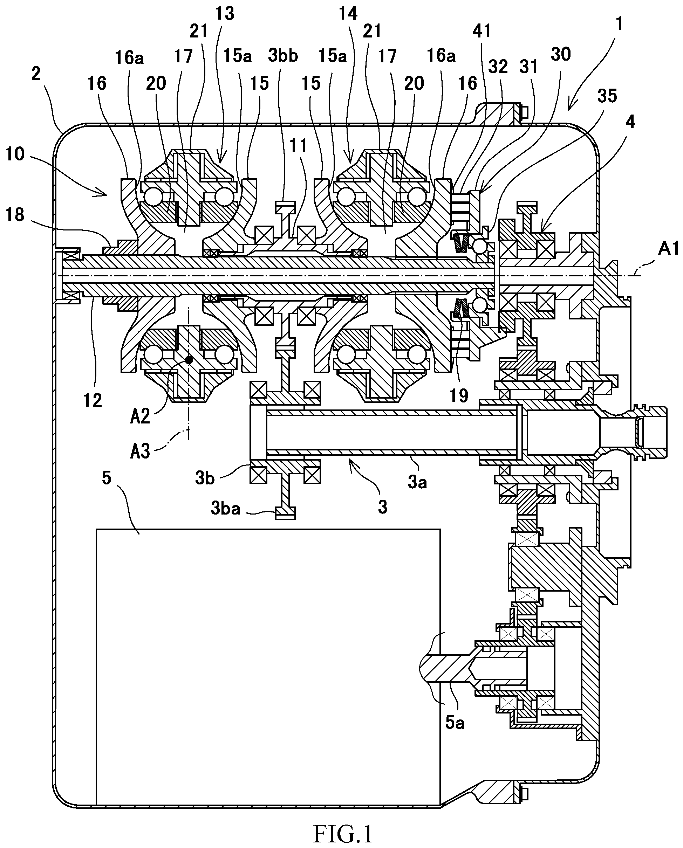

FIG. 1 is a cross-sectional view of an integrated drive generator 1 including a toroidal continuously variable transmission 10 according to Embodiment 1. As shown in FIG. 1, the integrated drive generator 1 (hereinafter referred to as "IDG") is used for an AC power supply of an aircraft and includes a casing 2 attached to an engine of the aircraft. The casing 2 accommodates an input structure 3, the toroidal continuously variable transmission 10, a power transmitting structure 4, and a power generator 5.

The transmission 10 includes a transmission input shaft 11 and a transmission output shaft 12 that are power transmitting shafts which are coaxially located and are rotatable relative to each other. An axis of the shafts 11 and 12 is referred to as a rotation axis A1, and a direction in which the rotation axis A1 extends is referred to as a rotation axis direction A1. The transmission input shaft 11 is connected to an engine rotating shaft through the input structure 3. The input structure 3 includes: a device input shaft 3a to which rotational force is input from the engine rotating shaft; and a gear pair 3b through which the rotation of the device input shaft 3a is transmitted to the transmission input shaft 11. The gear pair 3b includes: a gear 3ba that rotates integrally with the device input shaft 3a; and a gear 3bb that rotates integrally with the transmission input shaft 11. The transmission output shaft 12 is connected to a power generator input shaft 5a of the power generator 5 through the power transmitting structure 4 that is like a gear train.

The rotational force taken out from the engine rotating shaft is input to the transmission input shaft 11 through the input structure 3. The transmission 10 changes the speed of the rotation of the transmission input shaft 11 and outputs the rotation to the transmission output shaft 12. The rotational force of the transmission output shaft 12 is transmitted to the power generator input shaft 5a through the power transmitting structure 4. When the power generator input shaft 5a is driven, the power generator 5 generates AC power. Regardless of a change in the rotational speed of the engine rotating shaft, a change gear ratio of the transmission 10 is continuously changed such that the rotational speed of the power generator input shaft 5a is kept constant.

As one example, the transmission 10 is of a half toroidal type and a double cavity type and includes a disc pair 13 and a disc pair 14. The disc pair 13 includes an input disc 15 and an output disc 16, and the disc pair 14 includes another input disc 15 and another output disc 16. Each input disc 15 corresponds to a first disc, and each output disc 16 corresponds to a second disc. The input discs 15 are fitted to the transmission input shaft 11 so as to rotate integrally with the transmission input shaft 11. The output discs 16 are fitted to the transmission output shaft 12 so as to rotate integrally with the transmission output shaft 12.

The input disc 15 and the output disc 16 are located adjacent to each other in the rotation axis direction A1 so as to rotate about the rotation axis A1. The input disc 15 and the output disc 16 are located so as to be opposed to each other in the rotation axis direction A1 such that rotation axes of the input and output discs 15 and 16 coincide with each other. The input disc 15 and the output disc 16 respectively include a concave contact surface 15a and a concave contact surface 16a which are opposed to each other. The contact surface 15a of the input disc 15 and the contact surface 16a of the output disc 16 define a cavity 17 that is annular about the rotation axis A1.

As one example, the transmission 10 is of a middle input type. The transmission output shaft 12 is in the transmission input shaft 11 and projects from the transmission input shaft 11 to both sides. The two input discs 15 are located back to back on the transmission input shaft 11. The two output discs 16 are located outside the two input discs 15 in the rotation axis direction A1. The gear 3bb that rotates integrally with the transmission input shaft 11 is located on an outer peripheral surface of the transmission input shaft 11 and between the two input discs 15.

The output disc 16 of the disc pair 13 is fixed to the transmission output shaft 12 by a fixture 18. The output disc 16 of the disc pair 14 is biased toward the corresponding input disc 15 by a preload spring 19. When the transmission 10 is rotated, the output disc 16 of the disc pair 14 is biased toward the corresponding input disc 15 by a loading cam 30. The output disc 16 of the disc pair 14 is connected to the power transmitting structure 4 through the loading cam 30 so as to be able to transmit power to the power transmitting structure 4.

The transmission 10 includes: power rollers 20 located in the cavity 17; and trunnions 21 respectively supporting the power rollers 20 such that the power rollers 20 are tiltable. The trunnions 21 are tiltable about a tilt axis A2. The tilt axis A2 and the rotation axis A1 are skew lines. A direction in which the tilt axis A2 extends is referred to as a tilt axis direction A2. The trunnions 21 are supported by the casing 2 so as to be displaceable in the tilt axis direction A2. The power rollers 20 are supported by the trunnions 21 so as to be rotatable about a rotation axis A3 perpendicular to the tilt axis A2.

The power rollers 20 are sandwiched between the contact surface 15a of the input disc 15 and the contact surface 16a of the output disc 16 so as to be tiltable about the tilt axis A2. When the power rollers 20 and the trunnions 21 are displaced in the tilt axis direction A2, the tilt angles of the power rollers 20 about the tilt axis A2 are changed. The rotational force of the input disc 15 is changed in speed at the change gear ratio corresponding to the tilt angles and is transmitted to the output disc 16.

The loading cam 30 includes the output disc 16, a cam plate 31, and rollers 32 sandwiched between the output disc 16 and the cam plate 31. The cam plate 31 is supported by the transmission output shaft 12 through a bearing 35 so as to be rotatable. To be specific, the cam plate 31 is rotatable about the rotation axis A1. When the torque of the output disc 16 increases, the output disc 16 is pressed by the loading cam 30 in such a direction as to approach the input disc 15, and pressure by which the input disc 15 and the output disc 16 sandwich the power rollers 20 increases. The output disc 16 includes a cam surface 41 on a surface opposite to the contact surface 16a in the rotation axis direction A1. The loading cam 30 is located so as to be coaxial with the output disc 16 and rotatable.

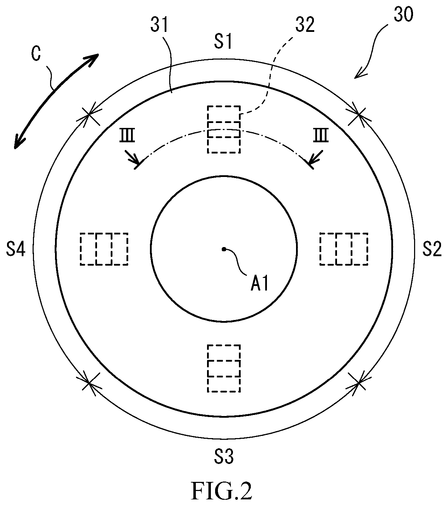

FIG. 2 is a side view of the loading cam 30 of FIG. 1 when viewed in the rotation axis direction A1. As shown in FIG. 2, the loading cam 30 includes cam sections S1, S2, S3, and S4 lined up in a circumferential direction C about the rotation axis A1. The rollers 32 are located in the respective cam sections S1, S2, S3, and S4. Since the cam section S1, S2, S3, and S4 are the same as each other, the following will described the cam section S1.

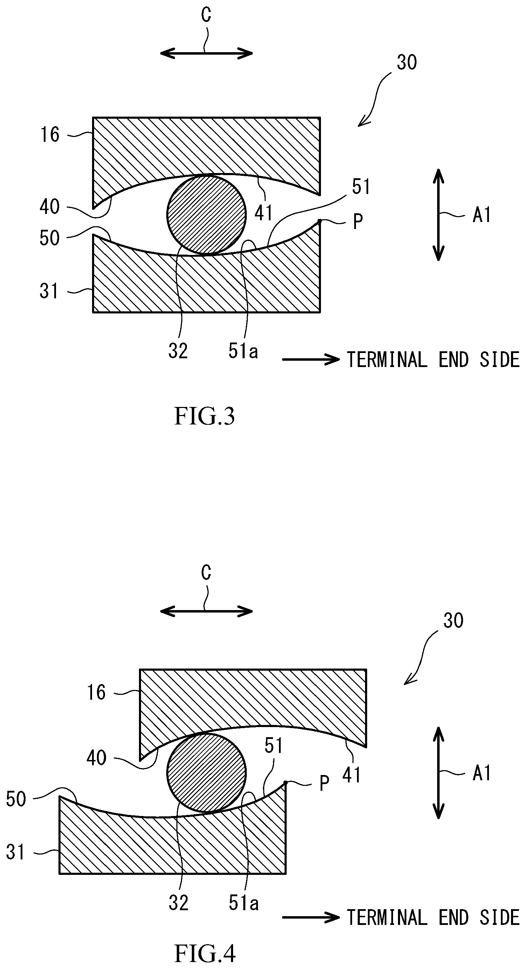

FIG. 3 is a cross-sectional view taken along line III-III of FIG. 2 and is a cross-sectional view of the loading cam 30. To be specific, FIG. 3 is a cross-sectional view of one cam section S1 of the loading cam 30 and is a cross-sectional view which extends in the circumferential direction C and is viewed in a radial direction of the cam plate 31. FIG. 3 shows a state where the transmitting torque of the loading cam 30 is zero. As shown in FIG. 3, the output disc 16 includes an opposing surface 40 opposed to the cam plate 31 in the rotation axis direction A1. The opposing surface 40 includes the cam surface 41. The cam plate 31 includes an opposing surface 50 opposed to the output disc 16 in the rotation axis direction A1. The opposing surface 50 includes a cam surface 51. In the present embodiment, the shape of the cam surface 41 of the output disc 16 and the shape of the cam surface 51 of the cam plate 31 are symmetrical to each other. The roller 32 is sandwiched between the cam surface 41 of the output disc 16 and the cam surface 51 of the cam plate 31 so as to be rotatable.

In the cross section of FIG. 3, the cam surface 51 of the cam plate 31 includes a concave surface 51a that curves such that a cam lead of the concave surface 51a increases. To be specific, the cam surface 51 of the cam plate 31 has a non-linear cam lead. The "cam lead" denotes an advance amount per unit disc rotation in the rotation axis direction A1. In the cross section of FIG. 3, the concave surface 51a is located in a region of the cam surface 51 which is within a range of 30% or more and 100% or less of the cam surface 51. In the present embodiment, the concave surface 51a corresponds to the entire cam surface 51 of the cam plate 31. The concave surface 51a does not include a bent point by which a curvature discontinuously changes.

Herein, in the circumferential direction C, a side located in a direction in which the roller 32 moves on the cam surface 51 in accordance with an increase in the transmitting torque of the loading cam 30 is defined as a terminal end side, and an end of the cam surface 51 which is located at the terminal end side is defined as a terminal end P. The cam surface 51 of the cam plate 31 curves such that the cam lead increases toward the terminal end P. In the cross section of FIG. 3, the curvature of the concave surface 51a continuously changes such that the concave surface 51a is not bent. For example, in the cross section of FIG. 3, the curvature of the concave surface 51a continuously increases toward the terminal end P. In the cross section of FIG. 3, the curvature of the concave surface 51a may be constant.

FIG. 4 is a cross-sectional view of the loading cam 30 of FIG. 3 at the time of high torque. As shown in FIG. 4, when the transmitting torque transmitted from the output disc 16 to the cam plate 31 through the roller 32 increases, the roller 32 moves on the concave surface 51a of the cam plate 31 in the circumferential direction C such that the output disc 16 separates from the cam plate 31 in the rotation axis direction A1. A normal line in the vicinity of the terminal end P of the concave surface 51a of the cam plate 31 is largely inclined relative to the rotation axis direction A1. Thus, a component force, acting in the rotation axis direction A1, of the load transmitted from from the roller 32 to the cam plate 31 decreases in accordance with the increase in the transmitting torque. Therefore, pressing force, i.e., axial force of the loading cam 30 in the rotation axis direction A1 hardly increases at the time of high torque.

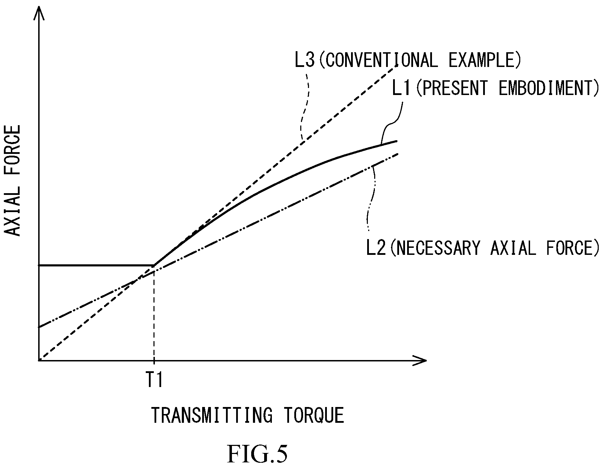

FIG. 5 is a graph showing a relation between the transmitting torque and axial force of the loading cam 30 of FIG. 3. In FIG. 5, a line L1 shows the axial force of the loading cam 30 of the present embodiment, a line L2 shows necessary axial force, and a line L3 shows the axial force of a conventional loading cam having a linear cam lead. When the transmitting torque is a predetermined value T1 or less, the axial force is being generated by the preload spring 19. When the transmitting torque increases beyond the predetermined value T1, the roller 32 moves on the cam surface 51 of the cam plate 31 in the circumferential direction C, and this increases the axial force of the loading cam 30.

Since the cam surface 51 is a concave surface that curves such that the cam lead increases, the rate of increase of the axial force in accordance with the increase in the transmitting torque lowers in the high torque range. Therefore, while appropriately increasing the axial force of the loading cam 30 in accordance with the increase in the torque, the axial force is prevented from becoming excessive in the high torque range. Moreover, since the cam surface 51 does not include the bent point in the cross section of FIG. 3, an increase in the axial force in accordance with the increase in the torque becomes smooth. Therefore, the torque transmission between the discs 15 and 16 and the power rollers 20 when the torque changes becomes stable.

### Embodiment 2

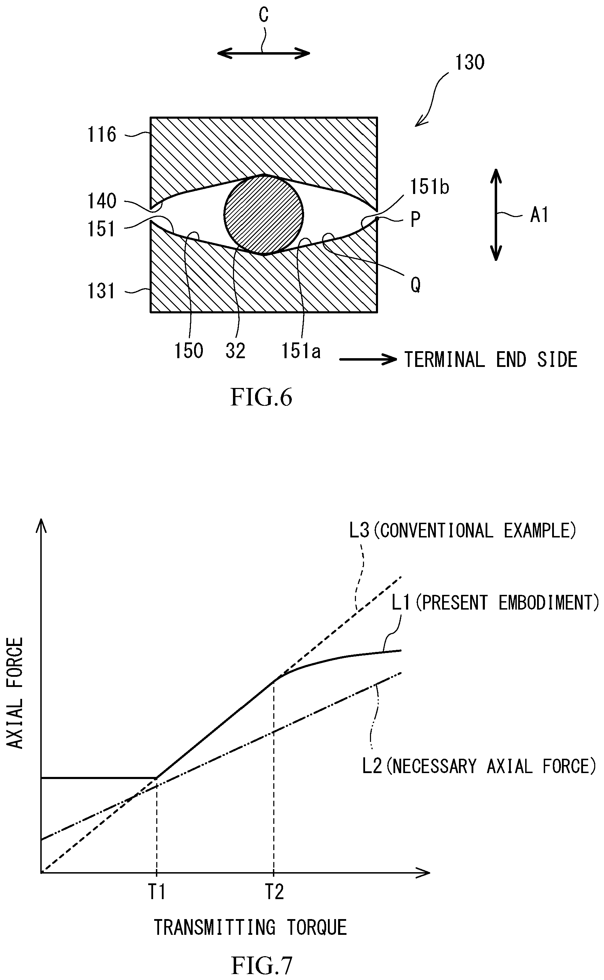

FIG. 6 is a cross-sectional view of a loading cam 130 according to Embodiment 2. FIG. 6 is a cross-sectional view which extends in the circumferential direction C of the loading cam 130 and is viewed in the radial direction of a cam plate 131. The same reference signs are used for the same components as Embodiment 1, and the repetition of the same explanation is avoided. As shown in FIG. 6, in the loading cam 130 of Embodiment 2, a cam surface 151 of an opposing surface 150 of the cam plate 131 includes an inclined surface 151a and a concave surface 151b. In the cross section of FIG. 6, the concave surface 151b is located in a region of the cam surface 151 which is within a range of 30% or more and 60% or less of the cam surface 151. The shape of an opposing surface 140 of an output disc 116 is symmetrical to the shape of the opposing surface 150 of the cam plate 131.

The inclined surface 151a is linearly inclined such that the cam lead becomes constant. The concave surface 151b curves such that the cam lead increases. The concave surface 151b is adjacent to an end Q of the inclined surface 151a which is located at the terminal end side of the cam surface 151 in the circumferential direction C. To be specific, the concave surface 151b is located at a high torque region side of the inclined surface 151a. The inclined surface 151a extends in a direction in which a tangential line of the end Q, continuous with the inclined surface 151a, of the concave surface 151b extends. Therefore, the bent point by which the curvature discontinuously changes is not generated at a boundary between the inclined surface 151a and the concave surface 151b.

FIG. 7 is a graph showing a relation between the transmitting torque and axial force of the loading cam 130 of FIG. 6. In FIG. 7, the line L1 shows the axial force of the loading cam 130 of the present embodiment, the line L2 shows necessary axial force, and the line L3 shows the axial force of the conventional loading cam having the linear cam lead. When the transmitting torque is less than the predetermined value T1, the axial force is generated by the preload spring 19. When the transmitting torque increases to become the predetermined value T1 or more, the roller 32 moves on the cam surface 151 of the cam plate 131 in the circumferential direction C, and this increases the axial force of the loading cam 130.

When the transmitting torque is not less than the predetermined value T1 and less than a predetermined value T2, the roller 32 is located on the linear inclined surface 151a, and the rate of increase of the axial force in accordance with the increase in the transmitting torque becomes constant. The predetermined value T1 is smaller than the predetermined value T2, and the predetermined value T2 corresponds to the end Q of FIG. 6. When the transmitting torque becomes the predetermined value T2 or more, the roller 32 moves on the concave surface 151b, and the rate of increase of the axial force in accordance with the increase in the transmitting torque lowers. Therefore, while appropriately increasing the axial force of the loading cam 130 in accordance with the increase in the torque, the axial force can be prevented from becoming excessive in the high torque range. Moreover, since the cam surface 151 does not include the bent point in the cross section of FIG. 6, the increase in the axial force in accordance with the increase in the torque becomes smooth. Therefore, the torque transmission between the discs 15 and 16 and the power rollers 20 when the torque changes becomes stable. Since the other components are the same as those in Embodiment 1, explanations thereof are omitted.

### Embodiment 3

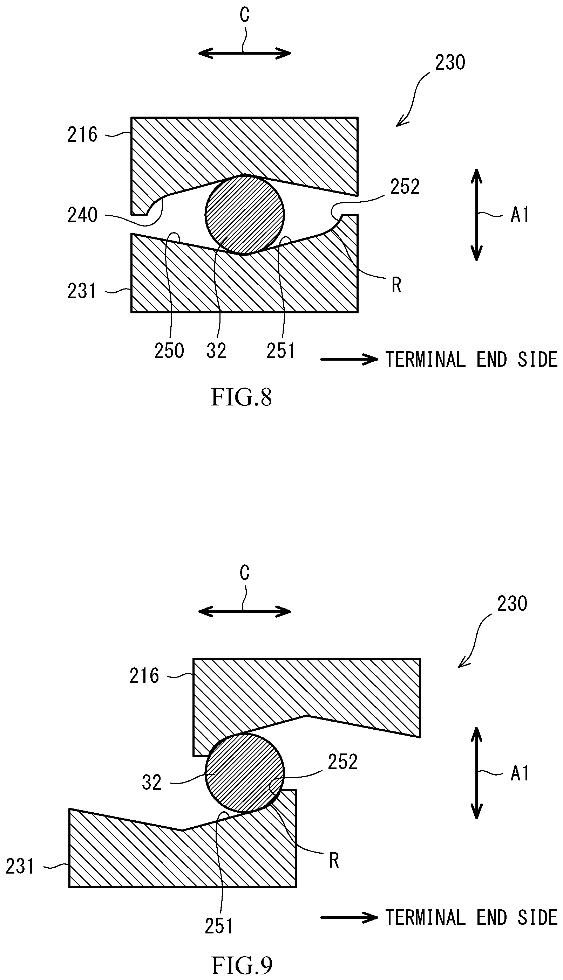

FIG. 8 is a cross-sectional view of a loading cam 230 according to Embodiment 3. FIG. 8 is a cross-sectional view which extends in the circumferential direction C of the loading cam 230 and is viewed in the radial direction of a cam plate 231. The same reference signs are used for the same components as Embodiment 1, and the repetition of the same explanation is avoided. As shown in FIG. 8, in the loading cam 230 of Embodiment 3, a cam surface 251 of an opposing surface 250 of the cam plate 231 is an inclined surface that is linearly inclined such that the cam lead becomes constant. The cam surface 251 may be a concave surface that curves such that the cam lead increases or may be a combination of an inclined surface having a constant cam lead and a concave surface that curves such that the cam lead increases.

In the circumferential direction C, a side located in a direction in which the roller 32 moves on the cam surface 251 of the cam plate 231 in accordance with the increase in the transmitting torque of the loading cam 230 is referred to as a terminal end side. In the cross section of FIG. 8, the opposing surface 250 of the cam plate 231 includes a stopper surface 252 which is adjacent to an end R, located at the terminal end side in the circumferential direction C, of the cam surface 251 and is directed in the circumferential direction C. The stopper surface 252 includes a portion in which when a normal line of this portion is decomposed into a line in the rotation axis direction A1 and a line in the circumferential direction C, the line in the circumferential direction C is longer than the line in the rotation axis direction A1. In the present embodiment, the stopper surface 252 is a curved surface having a curvature substantially equal to a curvature of an outer peripheral surface of the roller 32. The curvature of the stopper surface 252 may be less than the curvature of the outer surface of the roller 32. The shape of an opposing surface 240 of an output disc 216 is symmetrical to the shape of the opposing surface 250 of the cam plate 231. However, the output disc 216 does not have to include the stopper surface.

FIG. 9 is a cross-sectional view of the loading cam 230 of FIG. 8 at the time of high torque. As shown in FIG. 9, when the roller 32 reaches the stopper surface 252 in the high torque range, the roller 32 is received by the stopper surface 252. Therefore, even when the transmitting torque increases, the roller 32 does not move relative to the cam plate 231 in the circumferential direction C. Moreover, since the roller 32 is received by the stopper surface 252, the roller 32 is prevented from going over the cam surface 251 in the circumferential direction C.

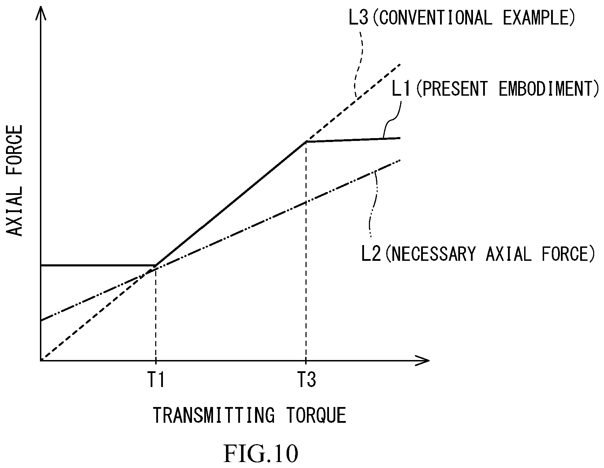

FIG. 10 is a graph showing a relation between the transmitting torque and axial force of the loading cam 230 of FIG. 8. In FIG. 10, the line L1 shows the axial force of the loading cam 230 of the present embodiment, the line L2 shows necessary axial force, and the line L3 shows the axial force of the conventional loading cam having the linear cam lead. When the transmitting torque is less than the predetermined value T1, the axial force is being generated by the preload spring 19. When the transmitting torque increases to become the predetermined value T1 or more, the roller 32 moves on the cam surface 251 of the cam plate 231 in the circumferential direction C, and this increases the axial force of the loading cam 230.

When the transmitting torque is not less than the predetermined value T1 and less than a predetermined value T3, the roller 32 is located on the linear inclined surface 251, and the rate of increase of the axial force in accordance with the increase in the transmitting torque becomes constant. The predetermined value T1 is smaller than the predetermined value T3. When the transmitting torque becomes the predetermined value T3 or more, the roller 32 is received by the stopper surface 252 and does not move relative to the cam plate 231 in the circumferential direction C. Therefore, even when the transmitting torque increases, the axial force of the loading cam 230 becomes constant. Thus, while appropriately increasing the axial force of the loading cam 230 in accordance with the increase in the torque, the axial force is prevented from becoming excessive in the high torque range. Since the other components are the same as those in Embodiment 1, explanations thereof are omitted.

### Embodiment 4

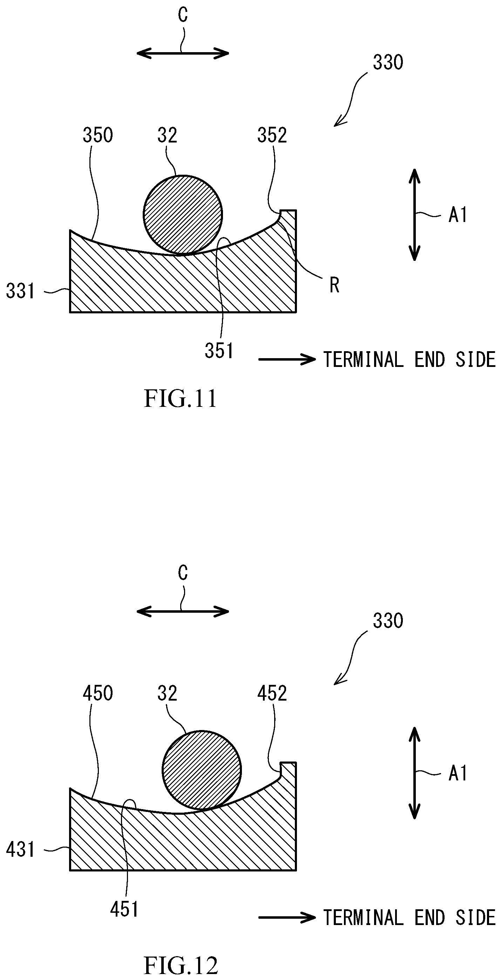

FIG. 11 is a cross-sectional view of a cam plate 331 of the loading cam according to Embodiment 4. As shown in FIG. 11, in the loading cam of Embodiment 4, a cam surface 351 of an opposing surface 350 of the cam plate 331 is a concave surface that curves such that the cam lead increases. The cam surface 351 may be a combination of an inclined surface having a constant cam lead and a concave surface that curves such that the cam lead increases.

The opposing surface 350 of the cam plate 331 includes a stopper surface 352 which is adjacent to the end R, located at the terminal end side in the circumferential direction C, of the cam surface 351 and is directed in the circumferential direction C. In the present embodiment, the stopper surface 352 is a curved surface having a curvature substantially equal to the curvature of the outer surface of the roller 32. The curvature of the stopper surface 352 may be less than the curvature of the outer peripheral surface of the roller 32.

When the transmitting torque of the loading cam increases, and the roller 32 moves on the cam surface 351 in the circumferential direction C, the rate of increase of the axial force in accordance with the increase in the transmitting torque lowers. In addition, the roller 32 is finally received by the stopper surface 352, and even when the transmitting torque increases, the roller 32 does not move in the circumferential direction C. Therefore, the transmitting torque of the loading cam finally becomes constant in the high torque range. Thus, while appropriately increasing the axial force of the loading cam in accordance with the increase in the torque, the axial force is satisfactorily prevented from becoming excessive in the high torque range. Since the other components are the same as those in Embodiment 1, explanations thereof are omitted.

### Embodiment 5

FIG. 12 is a cross-sectional view of a cam plate 431 of the loading cam according to Embodiment 5. As shown in FIG. 12, an opposing surface 450 of the cam plate 431 of Embodiment 5 includes a stopper surface 452 located at the terminal end side of a cam surface 451 in the circumferential direction C. The stopper surface 452 is a flat surface directed in the circumferential direction C. To be specific, the curvature of the stopper surface 452 is zero. The stopper surface 452 is directed in such a direction that when a normal line of the stopper surface 452 is decomposed into a line in the rotation axis direction A1 and a line in the circumferential direction C, the line in the circumferential direction C is longer than the line in the rotation axis direction A1. The cam surface 451 of the opposing surface 450 of the cam plate 431 may be an inclined surface having a constant cam lead, a concave surface that curves such that the cam lead increases, or a combination of an inclined surface having a constant cam lead and a concave surface that curves such that the cam lead increases.

When the transmitting torque of the loading cam increases, and the roller 32 reaches the stopper surface 452, the roller 32 is received by the stopper surface 452. Thus, even when the transmitting torque of the loading cam increases, the roller 32 does not move relative to the cam plate 431 in the circumferential direction C. Therefore, even when the transmitting torque increases, the axial force of the loading cam becomes constant. Thus, while appropriately increasing the axial force of the loading cam in accordance with the increase in the torque, the axial force is prevented from becoming excessive in the high torque range. Since the other components are the same as those in Embodiment 1, explanations thereof are omitted.

The technology of the present disclosure is not limited to the above embodiments. For example, the toroidal continuously variable transmission 10 does not have to be used as part of the IDG 1, and the use thereof is not limited to the aircraft. The type of the transmission 10 is not limited to the double cavity type and may be, for example, a single cavity type. The type of the transmission 10 is not limited to a middle input type and may be, for example, a middle output type. The input disc 15 corresponds to the second disc, and the output disc 16 corresponds to the first disc.

The foregoing has described the embodiments as examples of the technology disclosed in the present application. However, the technology in the present disclosure is not limited to these and is applicable to embodiments in which modifications, replacements, additions, omissions, and the like have been suitably made. Moreover, a new embodiment may be prepared by combining the components described in the above embodiment. For example, some of components or methods in one embodiment may be applied to another embodiment. Some components in an embodiment may be separated from the other components in the embodiment and arbitrarily extracted. Furthermore, the components shown in the attached drawings and the detailed explanations include not only components essential to solve the problems but also components for exemplifying the above technology and not essential to solve the problems.

The following aspects disclose preferred embodiments.

### First Aspect

A toroidal continuously variable transmission including:
a first disc and a second disc that are located so as to be opposed to each other and share a rotation axis;
a power roller sandwiched between the first disc and the second disc so as to be tiltable; and
a loading cam that presses the second disc toward the first disc in an axial direction in which the rotation axis extends, wherein:
   the loading cam includes
      a cam plate that is rotatable about the rotation axis and includes an opposing surface including a cam surface opposed to the second disc in the axial direction and
      a roller sandwiched between a cam surface of the second disc and the cam surface of the cam plate; and
   in a cross section that extends in a circumferential direction of the cam plate and is viewed in a radial direction of the cam plate, the cam surface of the cam plate includes a concave surface that curves such that a cam lead of the concave surface increases.

According to this configuration, as the torque transmitted from the second disc to the cam plate through the roller increases, the roller moves on the concave surface in the circumferential direction of the cam plate such that the second disc separates from the cam plate in the axial direction. The direction of a perpendicular line of a terminal end portion of the concave surface in the circumferential direction of the cam plate is close to the circumferential direction. Therefore, the axial component force of the load transmitted from the roller to the cam plate decreases in accordance with the increase in the torque. Thus, in the toroidal continuously variable transmission, while appropriately increasing the axial force of the loading cam in accordance with the increase in the torque, the axial force can be prevented from becoming excessive in the high torque range.

### Second Aspect

The toroidal continuously variable transmission according to the first aspect, wherein the concave surface corresponds to the entire cam surface of the cam plate.

According to this configuration, since the bent point is not generated on the cam surface, the increase in the axial force in accordance with the increase in the torque becomes smooth. Therefore, the torque transmission between the disc and the power roller when the torque changes can be made stable.

### Third Aspect

The toroidal continuously variable transmission according to the first or second aspect, wherein:
the cam surface of the cam plate further includes an inclined surface that is linearly inclined in the cross section such that the cam lead becomes constant;
in the circumferential direction, a side located in a direction in which the roller moves on the cam surface of the cam plate in accordance with an increase in transmitting torque of the loading cam is defined as a terminal end side; and
in the cross section, the concave surface is adjacent to an end of the inclined surface which is located at the terminal end side in the circumferential direction.

According to this configuration, the design of the change in the axial force in accordance with the increase in the torque can be diversified by the cam surface that is the combination of the inclined surface and the concave surface.

### Fourth Aspect

The toroidal continuously variable transmission according to the third aspect, wherein in the cross section, the inclined surface extends in a direction in which a tangential line of an end, continuous with the inclined surface, of the concave surface extends.

According to this configuration, since the bent point (point by which the curvature discontinuously changes) is not generated at a boundary between the inclined surface and the concave surface, the increase in the axial force in accordance with the increase in the torque becomes smooth. Therefore, the torque transmission between the disc and the power roller when the torque changes can be made stable.

### Fifth Aspect

The toroidal continuously variable transmission according to any one of the first to fourth aspects, wherein:
in the circumferential direction, a side located in a direction in which the roller moves on the cam surface of the cam plate in accordance with an increase in transmitting torque of the loading cam is defined as a terminal end side; and
in the cross section, the opposing surface of the cam plate includes a stopper surface that is adjacent to an end, located at the terminal end side in the circumferential direction, of the cam surface and is directed in the circumferential direction.

According to this configuration, when the roller reaches the stopper surface in the high torque range, the roller is received by the stopper surface. Therefore, even when the transmitting torque increases, the roller does not move in the circumferential direction. Thus, in the high torque range, the increase in the axial force of the loading cam is suppressed, and the axial force of the loading cam can be prevented from becoming excessive. Moreover, since the roller that moves on the cam surface in accordance with the increase in the torque is received by the stopper surface, the roller can be prevented from going over the cam surface in the circumferential direction.

### Sixth Aspect

A toroidal continuously variable transmission including:
a first disc and a second disc that are located so as to be opposed to each other and share a rotation axis;
a power roller sandwiched between the first disc and the second disc so as to be tiltable; and
a loading cam that presses the second disc toward the first disc in an axial direction in which the rotation axis extends, wherein:
   the loading cam includes
      a cam plate that is rotatable about the rotation axis and includes an opposing surface including a cam surface opposed to the second disc in the axial direction and
      a roller sandwiched between a cam surface of the second disc and the cam surface of the cam plate;
   in a circumferential direction of the cam surface, a side located in a direction in which the roller moves on the cam surface of the cam plate in accordance with an increase in transmitting torque of the loading cam is defined as a terminal end side;
   in a cross section that extends in the circumferential direction and is viewed in a radial direction of the cam plate, the opposing surface of the cam plate includes a stopper surface that is adjacent to an end, located at the terminal end side in the circumferential direction, of the cam surface and is directed in the circumferential direction; and
   in the cross section, a curvature of the stopper surface is not more than a curvature of an outer peripheral surface of the roller.

According to this configuration, when the roller reaches the stopper surface in the high torque range, the roller is received by the stopper surface. Therefore, even when the transmitting torque increases, the roller does not move in the circumferential direction. Thus, in the high torque range, the increase in the axial force of the loading cam is suppressed, and the axial force of the loading cam can be prevented from becoming excessive. Moreover, since the roller that moves on the cam surface in accordance with the increase in the torque is received by the stopper surface, the roller can be prevented from going over the cam surface in the circumferential direction.

### Reference Signs List

- 1: toroidal continuously variable transmission
- 15: input disc
- 16, 116, 216: output disc
- 20: power roller
- 30, 130, 230: loading cam
- 31, 131, 231, 331: cam plate
- 32: roller
- 50, 150, 250, 350: opposing surface
- 51, 151, 251, 351: cam surface
- 51a, 151b: concave surface
- 151a, 251a: inclined surface
- 252, 352: stopper surface
- A1: axial direction
- C: circumferential direction

## Claims

1. A toroidal continuously variable transmission comprising:
a first disc and a second disc that are located so as to be opposed to each other and share a rotation axis;
a power roller sandwiched between the first disc and the second disc so as to be tiltable; and
a loading cam that presses the second disc toward the first disc in an axial direction in which the rotation axis extends, wherein:
the loading cam includes
a cam plate that is rotatable about the rotation axis and includes an opposing surface including a cam surface opposed to the second disc in the axial direction and
a roller sandwiched between a cam surface of the second disc and the cam surface of the cam plate; and
in a cross section that extends in a circumferential direction of the cam plate and is viewed in a radial direction of the cam plate, the cam surface of the cam plate includes a concave surface that curves such that a cam lead of the concave surface increases.

2. The toroidal continuously variable transmission according to claim 1, wherein the concave surface corresponds to the entire cam surface of the cam plate.

3. The toroidal continuously variable transmission according to claim 1 or 2, wherein:
the cam surface of the cam plate further includes an inclined surface that is linearly inclined in the cross section such that the cam lead becomes constant;
in the circumferential direction, a side located in a direction in which the roller moves on the cam surface of the cam plate in accordance with an increase in transmitting torque of the loading cam is defined as a terminal end side; and
in the cross section, the concave surface is adjacent to an end of the inclined surface which is located at the terminal end side in the circumferential direction.

4. The toroidal continuously variable transmission according to claim 3, wherein in the cross section, the inclined surface extends in a direction in which a tangential line of an end, continuous with the inclined surface, of the concave surface extends.

5. The toroidal continuously variable transmission according to any one of claims 1 to 4, wherein:
in the circumferential direction, a side located in a direction in which the roller moves on the cam surface of the cam plate in accordance with an increase in transmitting torque of the loading cam is defined as a terminal end side; and
in the cross section, the opposing surface of the cam plate includes a stopper surface that is continuous with an end, located at the terminal end side in the circumferential direction, of the cam surface and is directed in the circumferential direction.

6. A toroidal continuously variable transmission comprising:
a first disc and a second disc that are located so as to be opposed to each other and share a rotation axis;
a power roller sandwiched between the first disc and the second disc so as to be tiltable; and
a loading cam that presses the second disc toward the first disc in an axial direction in which the rotation axis extends, wherein:
the loading cam includes
a cam plate that is rotatable about the rotation axis and includes an opposing surface including a cam surface opposed to the second disc in the axial direction and
a roller sandwiched between a cam surface of the second disc and the cam surface of the cam plate;
in a circumferential direction of the cam surface, a side located in a direction in which the roller moves on the cam surface of the cam plate in accordance with an increase in transmitting torque of the loading cam is defined as a terminal end side;
in a cross section that extends in the circumferential direction and is viewed in a radial direction of the cam plate, the opposing surface of the cam plate includes a stopper surface that is continuous with an end, located at the terminal end side in the circumferential direction, of the cam surface and is directed in the circumferential direction; and
in the cross section, a curvature of the stopper surface is not more than a curvature of an outer peripheral surface of the roller.
